# EUROPÄISCHE PATENTSCHRIFT

(11) **EP 1 391 029 B1**
(45) Veröffentlichungstag und Bekanntmachung des Hinweises auf die Patenterteilung: **12.10.2005**
(21) Anmeldenummer: 02745327.3
(22) Anmeldetag: 29.05.2002
(51) Int. Cl.: H02P 6/18

(54) **VERFAHREN ZUM BESTIMMEN DER DREHSTELLUNG DER ANTRIEBSWELLE EINES KOMMUTIERTEN GLEICHSTROMMOTORS**
METHOD FOR DETERMINING THE ROTATIONAL POSITION OF THE DRIVE SHAFT OF A COMMUTATED DC MOTOR
PROCEDE POUR DETERMINER LA POSITION ANGULAIRE DE L'ARBRE D'ENTRAINEMENT D'UN MOTEUR A COURANT CONTINU A COMMUTATION

(30) Priorität: 30.05.2001 DE 10126169
(43) Veröffentlichungstag der Anmeldung: 25.02.2004
(73) Patentinhaber: Leopold Kostal GmbH & Co. KG, 58507 Lüdenscheid (DE)
(72) Erfinder: GERLACH, Tobias, 58119 Hagen (DE)
(86) Internationale Anmeldenummer: PCT/EP2002/005876
(87) Internationale Veröffentlichungsnummer: WO 2002/097962

(56) Entgegenhaltungen:
- DE-C- 19 511 307
- DE-C- 19 729 238

## Beschreibung

Die Erfindung betrifft ein Verfahren zur Winkelbestimmung der Antriebswelle eines kommutierten Gleichstrommotors durch Auswerten der im Ankerstromsignal des Gleichstrommotors enthaltenen und digitalisierten Stromrippel.

Das Ankerstromsignal eines kommutierten Gleichstrommotors umfaßt einen Gleichanteil sowie einen den Gleichanteil überlagemden Wechselanteil. Der Wechselanteil entsteht bei einem Betrieb des Gleichstrommotors infolge des Zusammenwirkens von Magnet (Feld), Ankerwicklung und Kommutator des Gleichstrommotors. Dies äußert sich in einer kurzzeitigen Änderung der induzierten Spannung, woraus sich die Welligkeit des Ankerstromsignals ergibt. Die in dem Ankerstromsignal enthaltenen Stromspitzen - im folgenden Stromrippel genannt - treten bei einer Umdrehung des Ankers in einer der Anzahl der Kollektorlamellen entsprechenden Häufigkeit auf. Weist beispielsweise der Anker zehn Kollektorlamellen auf, sind im Ankerstromsignal entsprechend zehn Stromrippel zu erkennen. Eine Zählung der Stromrippel kann somit Aufschluß über die aktuelle Drehstellung des Ankers des Gleichstrommotors und somit bezüglich des angetriebenen Elements innerhalb seiner vorbestimmten Bewegungsstrecke geben. Zu diesem Zweck wird das analoge Ankerstromsignal digitalisiert, um eine entsprechende Zählung vornehmen zu können.
Um eine möglichst fehlerfreie Stromrippeldetektion durchführen zu können, wird das analoge Ankerstromsignal vor und ggf. auch nach seiner Digitalisierung zum Unterdrücken von Störeinflüssen entsprechend aufbereitet. Zur Aufbereitung des Ankerstromsignales werden Filterungen durchgeführt, die als Tiefpaßfilterung und/oder als Frequenzfilterungen ausgestaltet sind. Ein derartiges Signalaufbereitungsverfahren ist beispielsweise beschrieben in DE 195 11 307 C1. Sinn und Zweck derartiger Signalaufbereitungsverfahren ist es, ein präzises Ankerstromsignal, möglichst befreit von Störeinflüssen, bereitzustellen, damit dieses aufbereitete Ankerstromsignal anschließend im Hinblick auf die darin enthaltenen Stromrippel ausgewertet werden kann. Zur Positionsbestimmung werden die Rippel gezählt, da das Zählergebnis unmittelbar Aufschluß über die aktuelle Drehstellung der Antriebswelle bzw. des Ankers des Gleichstrommotors gibt. Zum Zählen der in dem Ankerstromsignal enthaltenen Stromrippel werden üblicherweise Minima- oder Maxima-Bestimmungsalgorithmen oder solche zur Bestimmung der Nulldurchgänge eingesetzt.

Es kommt jedoch vor, daß im Ankerstromsignal Fehl- und/oder Doppelrippel auftreten, durch die grundsätzlich das Stromrippelzählergebnis verfälscht wird. Bei Fehlrippeln handelt es sich um solche Stromrippel, die im Ankerstromsignal nicht detektierbar sind, obwohl tatsächlich eine Drehbewegung der Ankerwelle des Gleichstrommotors stattgefunden hat. Doppelrippel erscheinen in dem Ankerstromsignal als Doppelspitzen eines einzigen Stromrippels, so daß bei einer Maximazählung durch Zählen der beiden Maxima das Stromrippelzählergebnis verfälscht wird. Zur entsprechenden Korrektur des Stromrippelzählergebnisses bei Auftreten von Fehl- und/oder Doppelrippel ist dem Signalaufbereitungsverfahren und dem Auswerteverfahren üblicherweise nachgeschaltet ein Korrekturverfahren, mit dem zunächst das Auftreten von Fehl- und/oder Doppelrippeln erkannt werden soll, um anschließend die gewünschte Korrektur des Stromrippelzählergebnisses vornehmen zu können. Der Einsatz derartiger Verfahren ist notwendig, da diese Fehler insbesondere durch den Kommutator bedingt sind, und somit nicht ohne weiteres durch eine Aufbereitung des Ankerstromsignales eliminiert werden können. Eine solche Korrekturmaßnahme ist beispielsweise aus DE 197 29 238 C1 bekannt. Bei diesem Verfahren wird im Zeitpunkt einer Stromrippeldetektion anhand der aktuellen, aus Motorstrom- und Motorkenndaten ermittelten Drehzahl der Zeitpunkt der nächsten erwarteten Stromrippeldetektion berechnet. Dieser Zeitpunkt ist Teil eines bezüglich seiner Größe fest vorgegebenen Toleranzbereiches. Bei dem aus diesem Dokument bekannten Verfahren wird somit der berechnete Zeitpunkt des wahrscheinlich nächsten Kommutierungspunktes (Stromrippel) um die Größe des vorgegebenen Toleranzwertes erweitert. Auf diese Weise werden im oder vor dem berechneten Zeitpunkt nicht aufgetretene Stromrippel nur dann als Fehlrippel erkannt, wenn auch innerhalb des Toleranzbereiches ein Stromrippel nicht detektiert worden ist. Diese Verfahren sind jedoch rechenintensiv.

Ausgehend von diesem diskutierten Stand der Technik liegt der Erfindung daher die Aufgabe zugrunde, ein eingangs genanntes gattungsgemäßes Verfahren dergestalt weiterzubilden, mit dem bereits bei der Detektion der Stromrippel eine Eliminierung von Doppelrippeln möglich ist.

Diese Aufgabe wird bei einem gattungsgemäßen Verfahren erfindungsgemäß dadurch gelöst, daß
- fortlaufend die aktuellen, digital abgetasteten Ankerstromwerte in einem Speicher hinterlegt werden,
- beim Hinterlegen eines aktuellen Wertes in den Speicher dieser und eine bestimmte Anzahl an zuvor hinterlegten Werten in der zeitlichen Reihenfolge ihrer Hinterlegung bezüglich ihrer Größe verglichen werden und;
- bei Vorliegen einer über die betrachteten Werte insgesamt steigenden oder insgesamt fallenden Tendenz ein eine steigende oder ein eine fallende Flanke eines Stromrippels darstellendes Flankenerkennungssignal generiert wird.

Bei dem erfindungsgemäßen Verfahren werden fortlaufend die aktuellen digital abgetasteten Ankerstromwerte in einem Speicher hinterlegt. Die Speichertiefe kann variabel oder fest vorgegeben sein. Im letzteren Fall ist es zweckmäßig, ein Schieberegister, beispielsweise einen Ringspeicher mit einer vorbestimmten Anzahl an Speicherplätzen einzusetzen. Beim Hinterlegen des Ankerstromwertes, beispielsweise in einen Ringspeicher wird dieser aktuelle Wert sowie eine bestimmte Anzahl der in dem Ringspeicher zeitlich zuvor hinterlegten Werte, beispielsweise sämtliche in der Reihenfolge ihrer Hinterlegung bezüglich ihrer Größe dergestalt miteinander verglichen, ob jeder in dem Ringspeicher enthaltene Wert im Verhältnis zu dem beispielsweise unmittelbar zuvor hinterlegten Wert größer oder kleiner ist. Es kann dann insgesamt beim Hinterlegen eines jeweils aktuellen Ankerstromwertes eine Feststellung getroffen werden, ob über die betrachteten, zuvor hinterlegten Werte insgesamt eine steigende oder fallende Tendenz vorliegt. Wird eine insgesamt steigende oder insgesamt fallende Tendenz festgestellt, wird ein diese Tendenz wiedergebendes, eine steigende oder eine fallende Flanke eines Stromrippels darstellendes Flankenerkennungssignal generiert. Der in diesen Ausführungen verwendete Begriff "insgesamt steigend" oder "insgesamt fallend" bezogen auf die Tendenz der betrachteten Werte bezieht sich auf die Tendenz, die die Werte widerspiegeln, wobei diese Tendenz nicht zwingend monoton zu sein braucht. Daher wird im Rahmen dieser Ausführungen eine Tendenz mit insgesamt steigend oder insgesamt fallend beschrieben, bei der diese Tendenz im Generellen zutrifft, jedoch im einzelnen auch andere Einzeltendenzen innerhalb der betrachteten Wertepaare vorliegen können.

Eine Detektion der Stromrippel erfolgt durch eine Flankendetektion, wobei die jeweils steigende Flanke eines Stromrippels oder auch die fallende Flanke als Detektionskriterium herangezogen werden können. Die Flankenbetrachtung gestattet es bei einer hinreichend hohen digitalen Abtastrate, daß - verglichen mit einer Detektion von Maxima, Minima oder auch Nulldurchgängen wie beim vorbekannten Stand der Technik - die mögliche Detektionszeitspanne sehr viel größer ist. Daher ist die Bestimmung eines Stromrippels nicht von einem einzelnen Wert - wie beispielsweise bei einer Maxima/Minima Detektion - abhängig, sondern eine Stromrippeldetektion kann unter Einbeziehung mehrerer digitaler Abtastwerte erfolgen. Durch die jeweilige Betrachtungstiefe einer bestimmten Anzahl von zuvor ermittelten Werten in einem Abtastzeitpunkt können störungsbedingte Fehler, die sich ansonsten beispielsweise als Doppelrippel bemerkbar machen würden, ohne weiteres erkannt und eliminiert werden.

Eine ungestörte Stromrippelsignalflanke bzw. -flankenabschnitt ist dann gemäß dem beanspruchten Verfahren detektiert worden, wenn über die betrachteten Werte hinweg eine insgesamt und monoton gleichbleibende Tendenz - steigend oder fallend - festgestellt werden konnte. Daher erfolgt bei Vorliegen einer solchen insgesamt monoton gleichbleibenden Tendenz die Generierung eines entsprechenden Flankendetektionssignales.

Für den Fall, daß über die betrachteten Werte hinweg zwar eine insgesamt gleichbleibende, jedoch aufgrund von Ausreißern nicht als monoton gleichbleibend zu bezeichnende Tendenz vorliegt, können grundsätzlich diese Werte ebenfalls zur Flankendetektion eingesetzt werden. Bei Vorliegen eines solchen Ergebnisses erfolgt eine zweite Verwertbarkeitsprüfung der betrachteten Werte. Diese kann beispielsweise als Unterabtastung der zu betrachtenden Werte durchgeführt werden, in dem bei der Vergleichsbetrachtung ein oder mehrere Werte unberücksichtigt bleiben. Beispielsweise kann bei einer solchen zweiten Verwertbarkeitsprüfung nur jeder zweite oder jeder dritte zurückliegende Wert berücksichtigt werden. Die zweite Verwertbarkeitsprüfung kann jedoch auch nach Art eines statistischen Auswerteverfahrens ausgelegt sein, wobei jeweils zeitlich benachbarte Werte miteinander bezüglich ihrer Größe im Hinblick auf einen positiven oder negativen Größenunterschied untersucht werden. Anschließend kann dann in Abhängigkeit von der detektierten Häufigkeit eines positiven oder negativen Größenunterschiedes zwischen den jeweils betrachteten, zeitlich benachbarten Werten auf eine insgesamt steigende oder fallende Tendenz der betrachtenden Werte geschlossen werden. Zweckmäßig bei diesem Verfahren ist jedoch das Vorsehen eines Schwellwertes, dergestalt, daß auf eine verwertbare Tendenz nur dann geschlossen wird, wenn die Häufigkeit der einen Werte ein mehrfaches der Häufigkeit der anderen Werte beträgt.

Das Verwenden der sich über mehrere Abtastzeitpunkte erstreckenden Flanke eines Stromrippels zur Stromrippeldetektion ermöglicht es ebenfalls, daß eine Stromrippelzählung erst dann erfolgt, wenn mehrere gleichartige Flankendetektionssignale generiert worden sind, wobei bei einer solchen Auswertung ebenfalls die zuvor beschriebene statistische Auswertemöglichkeit eingebunden sein kann.

Zur Erhöhung der Betriebssicherheit ist es zweckmäßig, ein grundsätzlich für eine Stromrippelzählung dienendes Flankenerkennungssignal erst dann der Stromrippelzählung zuzuführen, wenn dieses Flankenerkennungsignal durch eine Plausibiltätskontrolle bestätigt worden ist. Diese Plausibilitätskontrolle kann beispielsweise die Detektion der nächsten gleichartigen Flanke innerhalb eines vorbestimmten Zeitintervalls sein. Zur Plausiblitätskontrolle kann jedoch auch vorgesehen sein, daß ein erstes Flankenerkennungssignal, darstellend eine Flanke eines Stromrippels, die steigend oder fallend ausgebildet sein kann, durch ein zweites Flankenerkennungssignal, darstellend die komplementäre Flanke des Stromrippels, welches dementsprechend dann fallend oder steigend ausgebildet sein muß, bestätigt werden. Erst dann geht das erste Flankenerkennungssignal in die Stromrippelzählung ein. Durch das komplementäre Flankenerkennungssignal ist sichergestellt, daß tatsächlich zwischen diesen beiden Flanken ein Maximum bzw. Minimum des Ankerstromsignales vorliegt. Da die Flankendetektion über ein gewisses Zeitintervall hinweg erfolgt, ist auf diese Weise ebenfalls sichergestellt, daß Doppelrippel in die nachfolgende Auswertung nicht eingehen. Zusätzlich kann neben einer Plausibilitätskontrolle durch das komplementäre Flankenerkennungssignal auch vorgesehen sein, daß dieses zusätzlichen Kontrollmechanismen unterworfen ist, beispielsweise einer vergleichenden Zeitbetrachtung.

Nachfolgend ist die Erfindung anhand eines Ausführungsbeispieles unter Bezugnahme auf die beigefügten Figuren beschrieben. Es zeigen:
- **Fig. 1:**: Ein Diagramm darstellend das analoge Ankerstromsignal eines kommutierten Gleichstrommotors, seine digitale Abtastung und die Hinterlegung der abgetasteten Digitalwerte in einem Ringspeicher,
- **Fig. 2a, 2b:**: Jeweils ein Diagramm mit dem analogen Ankerstromsignal eines kommutierten Gleichstrommotors und daraus abgeleiteten Kurven zur Flankendetektion und
- **Fig. 3:**: Ein Flußdiagramm darstellend Verfahrensschritte zur Stromrippeldetektion mittels einer Flankendetektion.

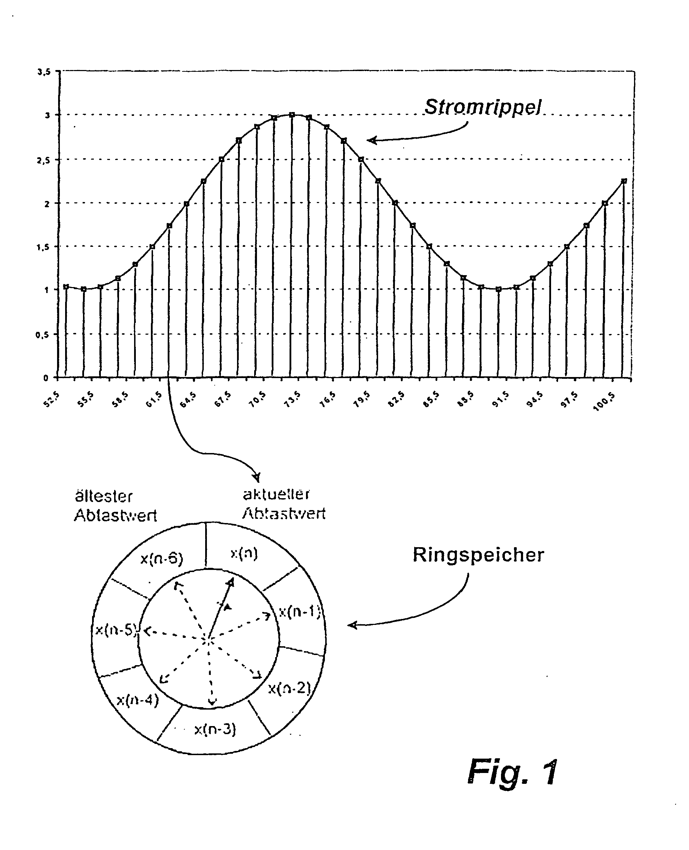

In dem in Figur 1 gezeigten Diagramm ist auf der y-Achse der Motorstrom und auf der x-Achse die Zeit aufgetragen. Dargestellt ist ein im analogen Ankerstromsignal eines Gleichstrommotors enthaltener Stromrippel. Das analoge Ankerstromsignal wird entsprechend einem vorgegebenen Takt digital abgetastet und quantisiert. Anschließend wird das Digitalsignal tiefpaßgefiltert, um dieses von höher frequenten Störschwingungen zu befreien. In einem nächsten Schritt wird das Digitalsignal differenziert und anschließend zu seiner Glättung nochmals tiefpaßgefiltert. Diese Signalaufbereitungsschritte sind mit Ausnahme der digitalen Abtastung des analogen Ankerstromsignals in den Figuren nicht dargestellt.

Zur Detektion der in dem analogen Ankerstromsignal enthaltenen Stromrippel werden die einzelnen digitalisierten und entsprechend aufbereiteten Werte in einem Ringspeicher hinterlegt, der in dem dargestellten Ausführungsbeispiel über sieben Speicherplätze verfügt. Nach dem Anlaufen des Gleichstrommotors wird der Ringspeicher mit dem siebten Abtastzeitpunkt gefüllt. Jeder weitere Abtastwert wird in den in dem dargestellten Ausführungsbeispiel mit x(n) bezeichneten Speicherplatz geschrieben, während alle vorangegangenen einen Wert wandern und der ursprünglich im letzten Speicherplatz x(n-6) befindliche Wert wird gelöscht. Mit dem Hinterlegen eines aktuellen Abtastwertes in den Speicherplatz x(n) erfolgt ein Größenvergleich mit sämtlichen vorangegangenen und noch in dem Ringspeicher befindlichen Werten x(n-1)... x(n-6). Der Größenvergleich erfolgt jeweils von einem Speicherplatz zum nächsten und somit mit dem zeitlich älteren Wert dahingehend, ob der zeitlich jüngere Wert größer oder kleiner als der zeitlich zu einem früheren Zeitpunkt in dem Ringspeicher hinterlegte Wert ist. Wird beim Hinterlegen des Abtastwertes in den Speicher x(n) festgestellt, daß alle älteren Werte jeweils monoton kleiner werdend sind, dann wird ein eine steigende Flanke eines Stromrippels darstellendes Flankenerkennungssignal generiert, welches grundsätzlich für eine Stromrippelzählung genutzt werden kann.

Dieses Flankenerkennungssignal geht jedoch tatsächlich in die Stromrippelzählung erst ein, wenn dieses durch ein komplementäres Flankenerkennungssignal bestätigt worden ist. Das komplementäre Flankenerkennungssignal zu dem zuvor beschriebenen steigenden ist ein fallendes, bei dem der aktuelle in dem Ringspeicher abgelegte Abtastwert in den Speicherplatz x(n) der kleinste in dem Ringspeicher hinterlegte Wert ist und alle älteren Werte monoton ansteigend und größer sind. Dies deutet auf eine fallende Flanke des Stromrippels im Zeitpunkt des Belegens des Speicherplatzes x(n) hin. Durch diese Maßnahme der wechselseitigen Verriegelung von komplementären Flankenerkennungssignalen ist sichergestellt, daß nur dann ein Flankenerkennungssignal in die Stromrippelzählung eingeht, wenn tatsächlich ein Stromrippel detektiert worden ist. In die Stromrippelzählung geht in dem dargestellten Ausführungsbeispiel nur das durch das fallende Flankenerkennungssignal bestätigte steigende Flankenerkennungssignal ein.

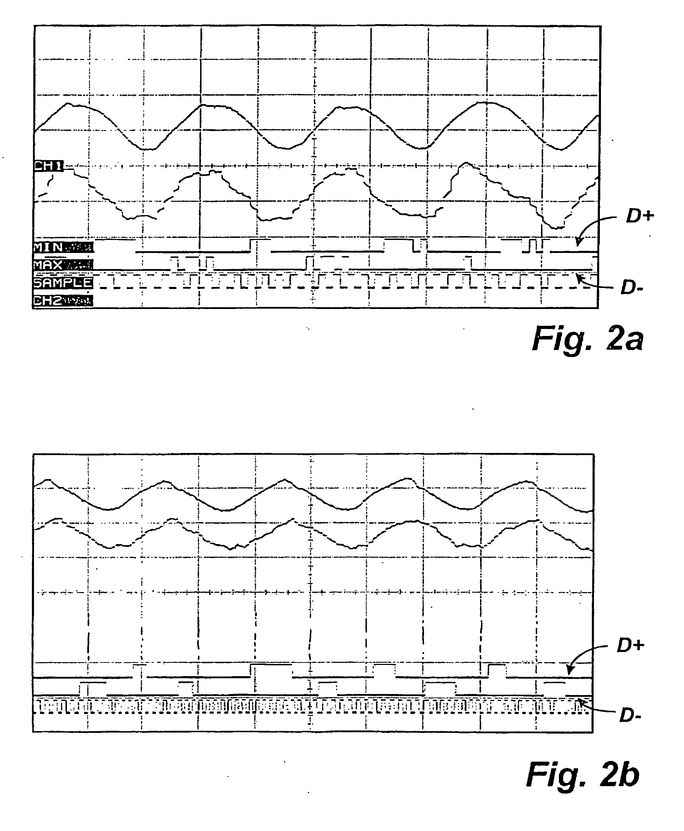

In Figuren 2a und 2b ist nochmals zur Verdeutlichung die wechselseitige Verriegelung von komplementären Flankenerkennungssignalen im Verlaufe des Ankerstromsignales eines kommutierten Gleichstrommotors dargestellt. In beiden Figuren stellt jeweils die obere Kurve das analoge Ankerstromsignal dar. Die unter der analogen Ankerstromsignalkurve abgebildete Kurve stellt das digitalisierte Ankerstromsignal dar, wobei die einzelnen Digitalwerte miteinander verbunden sind. Die digitalisierten Abtastwerte sind anschließend tiefpaßgefiltert, abgeleitet und nochmals tiefpaßgefiltert worden. Unterhalb dieser aufbereiteten Ankerstromsignalkurve ist in der untersten Zeile die digitale Abtastrate dargestellt. Über der die digitale Abtastung wiedergebenden Kurve dargestellt sind die Zeitpunkte, in denen steigende Flanken aus der aufbereiteten Ankerstromsignalkurve detektiert worden sind. Diese Kurve ist in den Figuren 2a und 2b mit D-gekennzeichnet. Oberhalb dieser die erfaßten steigenden Stromrippelflanken wiedergebenden Kurve D+ sind die Zeitpunkte, in denen fallende Stromrippelflanken detektiert worden sind. Sowohl die Kurve D+ des Erkennens der steigenden Flanken als auch die Kurve D- des Erkennens der fallenden Flanken sind unabhängig voneinander aufgetragen, ohne daß ein erstes Flankenerkennungssignal durch ein komplementäres weiteres bestätigt worden wäre. Erkennbar ist in dieser Darstellung, daß aufgrund des Kurvenverlaufes des digitalisierten und aufbereiteten Ankerstromsignales bei einigen Flanken, diese mehrmals als steigend oder fallend detektiert worden sind. Begründet kann dies sein in einem unregelmäßigen Verlauf des Ankerstromsignales oder auch dadurch, daß die Flankenlänge so groß ist, daß die Flankendetektion über die zeitliche Länge der Flanke eines Stromrippels mehrmals erfolgt ist. Zum Teil zeigen die einzelnen Stromrippel des digitalisierten und aufbereiteten Ankerstromsignals eine Doppelspitze mit zwei Maxima, so daß grundsätzlich mehrere steigende Flanken zu detektieren sind.

Figur 2b zeigt entsprechende Signale, wobei jedoch die steigenden und fallenden Flankendetektionssignale wechselweise zueinander verriegelt sind, so daß beispielsweise nur ein solches steigenden Flankenerkennungssignal als gültiges angesehen wird, welches anschließend durch ein komplementäres Flankenerkennungssignal (hier: ein fallendes) bestätigt worden ist. Daher gehen in die Stromrippelzählung nur diejenigen steigenden Flankenerkennungssignale ein, denen sich unmittelbar anschließend ein fallendes Flankenerkennungssignal anschließt. Die übrigen steigenden Flankenerkennungssignale bleiben unberücksichtigt, da auf diese zeitlich gesehen kein fallendes Flankenerkennungssignal festgestellt worden ist.

Im Zuge dieser Auswertung werden somit ohne weiters Doppelrippel oder hochfrequente Störeinflüsse eliminiert.

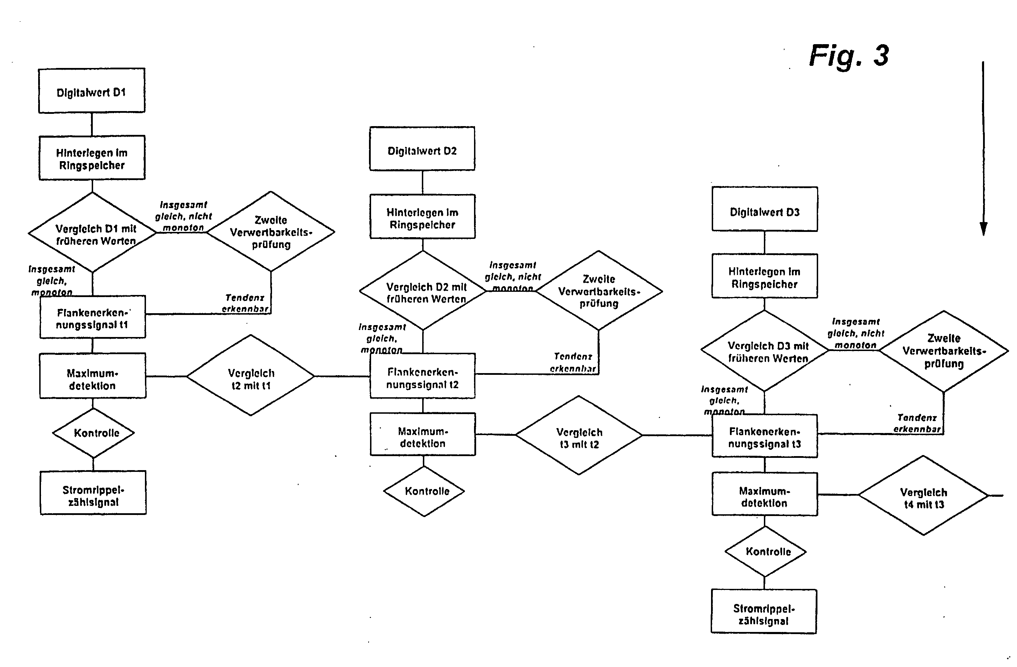

Figur 3 zeigt ein Flußdiagramm, in dem die beschriebenen Verfahrensschritte nochmals wiedergegeben sind. In Ergänzung zu der zu Figur 1 beschriebenen Flankendetektion, die letztendlich zur Generierung eines ersten Flankenerkennungssignals geführt hat, da die in dem Ringspeicher hinterlegten Werte sämtlich insgesamt und monoton von dem zuerst hinterlegten Wert bis zu dem zuletzt hinterlegten Wert steigend ausgebildet waren, würde ein Flankenerkennungssignal nicht generiert werden, wenn einer der sieben in dem Ringspeicher hinterlegten Werte dieses Kriterium nicht erfüllen würde. Da derartige Ausreißer jedoch störungsbedingt vorkommen können, können grundsätzlich auch ohne das Ergebnis zu verfälschen solche insgesamt steigend oder insgesamt fallenden Wertesequenzen zur Generierung eines Flankenerkennungssignals genutzt werden, die eine geringe Anzahl derartiger Ausreißer aufweisen. Zu diesem Zweck können bei der Feststellung, daß das Kriterium einer insgesamt und monoton steigenden oder fallenden Wertesequenz nicht erfüllt ist, diese Werte einer zweiten Verwertbarkeitsprüfung unterzogen werden. In dieser zweiten Verwertbarkeitsprüfung wird bei dem dargestellten Ausführungsbeispiel eine Unterabtastung vorgenommen, bei der nur jeder zweite, in dem Ringspeicher hinterlegte Wert ausgehend von dem zuletzt hinterlegten Wert x(n) auf das zuvor beschriebene Kriterium hin untersucht wird. Wird festgestellt, daß diese dann betrachteten Werte das Kriterium insgesamt und monoton steigend oder fallend erfüllen, dann wird auf dieser Grundlage ein Flankenerkennungssignal generiert.

Bei nicht Vorliegen einer entsprechenden Wertereihe in dem Ringspeicher erfolgt keine Flankenerkennung, dementsprechend wird in diesem Falle auch kein Flankenerkennungssignal generiert. Dies ist insbesondere im Bereich der Maxima und Minima des Ankerstromsignales der Fall.

Bevor das erste Flankenerkennungssignal in die Stromrippelzählung eingeht, wird dieses verriegelt und mit der Tendenz des nächsten nach einer Flankenerkennung generierten Flankenerkennungssignal verglichen. Ist die Tendenz des nächsten generierten Flankenerkennungssignals gleich mit der Tendenz des verriegelten, dann geht das erste Flankenerkennungssignal nicht in die Stromrippelzählung ein und wird nicht weiter bearbeitet. Vielmehr wird dann das nachfolgende Flankenerkennungssignal verriegelt. Erst wenn ein verriegeltes Flankenerkennungssignal mit einer bestimmten Tendenz durch ein nachfolgendes Flankenerkennungssignal mit komplementärer Tendenz bestätigt worden ist, kann daraus gefolgert werden, daß ein Maximum oder ein Minimum des Ankerstromsignals, nämlich ein Stromrippel detektiert worden ist. Dann geht einer der beiden Flankenerkennungssignale in die Stromrippelzählung ein oder es wird ein eigenes Stromrippelzählungssignal generiert.

Bevor nach der Detektion eines Maximums oder Minimums des Ankerstromsignales ein Signal zur Stromrippelzählung generiert wird, kann über ein Kontrollverfahren nochmals die Plausibilität des nunmehr erkannten Maximums im Hinblick auf die theoretische Möglichkeit des Vorliegens eines Stromrippels durchgeführt werden. Dies können beispielsweise Zeitbetrachtungen sein, die etwa ausgehend von einem zuletzt detektierten Stromrippel und unter Kenntnis der Drehzahl des Gleichstrommotors, beispielsweise aus den Motorstrom- und Motorkenndaten ermittelt, als nächster zu erwartender Kommutierungsvorgang ermitteln.

Aus der Beschreibung der Erfindung wird deutlich, daß durch die berücksichtigte zeitliche Tiefe bei der Flankendetektion kurzzeitige Störeinflüsse ohne weiters eliminiert werden können. Auch eine Fehlinterpretation von Doppelrippeln kann bei dem Gegentand des Verfahrens ohne weiteres vermieden werden.

## Patentansprüche

1. Verfahren zur Drehwinkelbestimmung der Antriebswelle eines kommutierten Gleichstrommotors durch Auswerten der im Ankerstrom des Gleichstrommotors enthaltenen, digitalisierten Stromrippel, **dadurch gekennzeichnet, daß**
- fortlaufend die aktuellen, digital abgetasteten Ankerstromwerte in einem Speicher hinterlegt werden,
- beim Hinterlegen eines aktuellen Wertes in den Speicher dieser und eine bestimmte Anzahl an zuvor hinterlegten Werten in der zeitlichen Reihenfolge ihrer Hinterlegung bezüglich ihrer Größe verglichen werden und
- bei Vorliegen einer über die betrachteten Werte insgesamt steigenden oder insgesamt fallenden Tendenz ein eine steigende oder ein eine fallende Flanke eines Stromrippels darstellendes Flankenerkennungssignal generiert wird.

2. Verfahren nach Anspruch 1, **dadurch gekennzeichnet, daß** ein Flankendetektionssignal bei insgesamt und monoton gleichbleibender Tendenz der betrachteten Werte generiert wird.

3. Verfahren nach Anspruch 1, **dadurch gekennzeichnet, daß** bei einer insgesamt einheitlichen, jedoch nicht monotonen Tendenz der betrachteten Werte eine zweite Verwertbarkeitsprüfung durchgeführt wird.

4. Verfahren nach Anspruch 3, **dadurch gekennzeichnet, daß** als zweite Verwertbarkeitsprüfung der betrachteten Werte eine Unterabtastung der zu betrachtenden Werte durchgeführt wird, in dem bei der Vergleichsbetrachtung ein oder mehrere Werte unberücksichtigt bleiben.

5. Verfahren nach Anspruch 3, **dadurch gekennzeichnet, daß** die zweite Verwertbarkeitsprüfung als statistisches Auswerteverfahren ausgelegt ist, wobei jeweils benachbarte Werte bezüglich einer steigenden oder fallenden Tendenz untersucht werden und anschließend in Abhängigkeit von der Häufigkeit der festgestellten Tendenzen auf eine insgesamt monoton steigende oder fallende Tendenz der betrachteten Werte geschlossen wird.

6. Verfahren nach einem der Ansprüche 1 bis 5, **dadurch gekennzeichnet, daß** innerhalb eines Zeitfensters jeweils zurückliegende Flankenerkennungssignale bezüglich ihrer jeweiligen Tendenz untersucht werden und anschließend in Abhängigkeit von der Häufigkeit auf eine insgesamt steigende oder fallende Tendenz innerhalb des betrachteten Zeitfensters geschlossen wird.

7. Verfahren nach Anspruch 5 oder 6, **dadurch gekennzeichnet, daß** das Zeitfenster und/oder die Entscheidungsschwelle in Abhängigkeit vom Betriebszustand des Gleichstrommotors geändert werden kann.

8. Verfahren nach einem der Ansprüche 1 bis 7, **dadurch gekennzeichnet, daß** ein generiertes Flankenerkennungssignal erst dann einer weiteren Auswertung zugeführt wird, wenn dieses Flankenerkennungssignal durch das Ergebnis einer Plausibilitätskontrolle bestätigt worden ist.

9. Verfahren nach Anspruch 8, **dadurch gekennzeichnet, daß** zur Plausibilitätskontrolle ein erstes Flankenerkennungssignal, darstellend eine Flanke eines Stromrippels - steigend oder fallend - durch ein zweites Flankenerkennungssignal, darstellend die komplementäre Flanke des Stromrippels - fallend oder steigend - bestätigt werden muß, bevor eine Zählung dieses anhand seiner Flanken detektierten Stromrippels vorgenommen wird.

## Claims

1. Process for determining the angle of rotation of the drive shaft of a commutating direct current motor by evaluating the digitalised current ripples contained in the armature current of the direct current motor, **characterised by the fact** that
- the prevailing, digitally scanned armature current values are continuously filed in a memory,
- when a prevailing value is filed in the memory, this one and a certain number of previously filed values are compared in respect of their magnitude in the chronological order of their being filed, and
- in the case of there being an overall rising or overall falling tendency throughout the values under examination, an edge detection signal is generated representing a rising or one representing a falling edge of a current ripple.

2. Process in accordance with Claim 1, **characterised by the fact** that an edge detection signal is generated if there is an overall and monotonously constant tendency of the values under examination.

3. Process in accordance with Claim 1, **characterised by the fact** that in the case of an overall uniform, though not monotonous, tendency of the values under examination a second acceptability check is conducted.

4. Process in accordance with Claim 3, **characterised by the fact** that a secondary sampling of the values under examination is conducted as a second acceptability check of the values under examination, in which one or more values are not taken into account for the comparison.

5. Process in accordance with Claim 3, **characterised by the fact** that the second acceptability check is conceived as a statistical analysis process, for which respectively adjacent values are examined in respect of a rising or a falling tendency and subsequently an overall monotonously rising or falling tendency of the values under examination is indicated, depending on the frequency of the established tendencies.

6. Process in accordance with any of Claims 1 to 5, **characterised by the fact** that previous edge detection signals within a respective time window are examined as regards their respective tendency and subsequently an overall rising or falling tendency within the time window under examination is indicated, depending on the frequency.

7. Process in accordance with Claim 5 or Claim 6, **characterised by the fact** that the time window and/or the decision threshold can be changed depending on the operational state of the direct current motor.

8. Process in accordance with any of Claims 1 to 7, **characterised by the fact** that a generated edge detection signal is not contributed to a further evaluation until this edge detection signal has been confirmed by the result of a plausibility check.

9. Process in accordance with Claim 8, **characterised by the fact** that to effect a plausibility check a first edge detection signal representing an edge of a current ripple - rising or falling - must be confirmed by a second edge detection signal representing the complementary edge of the current ripple before a count is conducted of this current ripple that has been detected on the basis of its edges.

## Revendications

1. Procédé pour la détermination de la position de rotation angulaire de l'arbre de commande d'un moteur à courant continu commuté, par évaluation des ripples de courant contenues dans le signal de courant d'induit du moteur à courant continu, et numérisées, **caractérisé en ce que**
- les valeurs de courant d'induit actuelles, captées numériquement sont mises en mémoire en continu,
- lors de la mise en mémoire d'une valeur actuelle, celle-ci et un nombre déterminé de valeurs précédemment mises en mémoire sont comparés quant à leur grandeur, dans l'ordre chronologique de leur mise en mémoire, et que,
- en présence d'une tendance globalement croissante ou décroissante au-delà des valeurs considérées, un signal de détection de flanc, représentant un flanc croissant ou décroissant d'une ripple de courant, est généré.

2. Procédé selon la revendication 1, **caractérisé en ce qu'**un signal de détection de flanc est généré pour une tendance invariable globale et monotone des valeurs considérées.

3. Procédé selon la revendication 1, **caractérisé en ce que**, pour une tendance globalement uniforme, mais cependant pas monotone des valeurs considérées, un deuxième contrôle de l'exploitabilité est exécuté.

4. Procédé selon la revendication 3, **caractérisé en ce que**, comme deuxième contrôle de l'exploitabilité des valeurs considérées, est exécuté un sous-échantillonnage des valeurs à considérer, dans le cadre duquel une ou plusieurs valeurs ne sont pas prises en considération lors de la comparaison.

5. Procédé selon la revendication 3, **caractérisé en ce que** le deuxième contrôle d'exploitabilité est réalisé en tant que procédé d'évaluation statistique, des valeurs voisines étant examinées chaque fois quant à une tendance croissante ou décroissante, et ensuite, en dépendance de la fréquence des tendances constatés, on conclut qu'il s'agit d'une tendance des valeurs considérées croissant ou décroissant de manière monotone.

6. Procédé selon l'une des revendications 1 à 5, **caractérisé en ce que**, à l'intérieur d'une fenêtre de temps, des signaux de détection de flancs précédents sont chaque fois examinés quant à leur tendance respective, et, qu'ensuite on conclut, en fonction de la prévalence d'une tendance globalement croissante ou décroissante à l'intérieur de la fenêtre de temps considérée.

7. Procédé selon la revendication 5 ou 6, **caractérisé en ce que** la fenêtre de temps et / ou le seuil de décision peuvent être modifiés en dépendance de l'état de marche du moteur à courant continu.

8. Procédé selon l'une des revendications 1 à 7, **caractérisé en ce qu'**un signal de détection de flanc généré n'est conduit à une autre évaluation que lorsque que le signal de détection de flanc a été confirmé par le résultat d'un contrôle de plausibilité.

9. Procédé selon la revendications 8, **caractérisé en ce que**, pour le contrôle de plausibilité, un premier signal de détection de flanc, qui représente un flanc d'une ripple de courant - croissant ou décroissant - doit être confirmé par un deuxième signal de détection de flanc, qui représente le flanc complémentaire - croissant ou décroissant - de la ripple de courant, avant qu'un comptage de cette ripple de courant, détectée au moyen de son flanc, soit effectué.
